(19) Europäisches Patentamt
European Patent Office
Office européen des brevets

(11) EP 4 596 612 A1

(12) EUROPEAN PATENT APPLICATION
published in accordance with Art. 153(4) EPC

(43) Date of publication:
**06.08.2025 Bulletin 2025/32**

(21) Application number: **23872313.4**

(22) Date of filing: **26.09.2023**

(51) International Patent Classification (IPC):
***C08J 5/24*** *(2006.01)* ***B29C 70/42*** *(2006.01)*
***C08G 59/56*** *(2006.01)* ***B29K 63/00*** *(2006.01)*

(52) Cooperative Patent Classification (CPC):
**B29C 70/42; C08G 59/56; C08J 5/24**

(86) International application number:
**PCT/JP2023/034860**

(87) International publication number:
**WO 2024/071090 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 JP 2022158121**

(71) Applicant: **Teijin Limited**
**Osaka-shi, Osaka 530-0005 (JP)**

(72) Inventors:
- **KUBOTA, Yudai**
  **Osaka-shi, Osaka 530-0005 (JP)**
- **ASAI, Masato**
  **Osaka-shi, Osaka 530-0005 (JP)**
- **KANEKO, Toru**
  **Osaka-shi, Osaka 530-0005 (JP)**

(74) Representative: **Carpmaels & Ransford LLP**
**One Southampton Row**
**London WC1B 5HA (GB)**

# (54) PREPREG, AND METHOD FOR PRODUCING FIBER-REINFORCED COMPOSITE MATERIAL USING SAID PREPREG

(57) The present invention provides a prepreg comprising a fiber-reinforced base material and an epoxy resin composition that partially or totally impregnates the fiber-reinforced base material, wherein the prepreg is characterized in that the epoxy resin composition contains an epoxy resin, dicyandiamide, a urea curing accelerator, an aromatic amine, and polyamide particles, the epoxy resin contains N,N,N',N'-tetraglycidyldiaminodiphenylmethane in an amount exceeding 60 mass parts per 100 mass parts of the epoxy resin, and the aromatic amine is represented by formula (1)

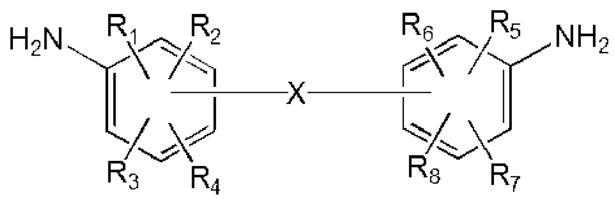

Chemical Formula (1)

(where, there is at least one substituent other than hydrogen at the ortho position to the amino group, and, in chemical formula (1), R1 to R8 each independently are a hydrogen atom, a C1-6 aliphatic substituent, an aromatic substituent, or a halogen atom, and at least one substituent is a C1-6 aliphatic substituent. X is $-CH_2-$, $-CH(CH_3)-$, - $C(CH_3)_2-$, -S-, -O-, -CO-, -CONH-, or -C(=O)-.), the polyamide particles have a shape having an average aspect ratio of less than 1.30, and the melting point (Tm) of the polyamide particles and the exothermic peak temperature (Tp) of the epoxy resin composition measured using a differential scanning calorimeter satisfy numerical formula (1) $Tp<Tm\leq Tp+50$ ...numerical formula (1).

EP 4 596 612 A1

# Description

## Technical Field

The present invention relates to a prepreg and a method for producing a fiber-reinforced composite material using the prepreg. More specifically, the present invention relates to a prepreg containing polyamide particles functioning as interlaminar particles, and a method for producing a fiber-reinforced composite material using the prepreg.

## Background Art

A fiber-reinforced composite material composed of reinforcing fibers and a resin has features such as light weight, high strength, and high elastic modulus, and is widely applied to aircraft, sports and leisure, and general industries. This fiber-reinforced composite material is often produced via a prepreg in which reinforcing fibers and a resin called a matrix resin are integrated in advance.

As the resin constituting the prepreg, a thermosetting resin is widely used because of a high degree of freedom in molding due to tackiness and drapability of the prepreg. In addition, the fiber-reinforced composite material is often used as a laminated sheet in which a plurality of prepregs are laminated in multiple layers while changing a fiber axis direction thereof, but there is a problem that interlaminar strength is low and delamination easily occurs because reinforcing fibers are not oriented in a sheet thickness direction.

Patent Literature 1 discloses a prepreg including a fiber-reinforced base material composed of carbon fibers and an epoxy resin composition with which a part or a whole of the fiber-reinforced base material is impregnated, wherein the epoxy resin composition contains an epoxy resin, dicyandiamide, a predetermined aromatic amine, and polyamide particles. In this prepreg, the polyamide particles function as interlaminar particles, but nothing is mentioned about a shape and a surface state of the polyamide particles, and a relationship between a curing temperature of the epoxy resin composition and a melting point of the polyamide particles.

## Citation List

### Patent Literature

Patent Literature 1: JP 2019-156982 A

## Summary of Invention

### Technical Problem

An object of the present invention is to provide a prepreg capable of solving the problem of the conventional art described above and producing a fiber-reinforced composite material having high impact resistance and toughness, and a method for producing a fiber-reinforced composite material produced using the prepreg.

### Solution to Problem

As a result of studies to solve the above problem, the present inventors have found that when polyamide particles having a predetermined shape are used as interlaminar particles, and a melting point of the polyamide particles and a curing temperature of an epoxy resin composition have a predetermined relationship, interfacial adhesion of the polyamide particles in the epoxy resin composition can be improved, and as a result, impact resistance and toughness of a resulting fiber-reinforced composite material can be improved, leading to completion of the present invention.

The present invention for achieving the above object is described below.

[1] A prepreg including:

a fiber-reinforced base material; and
an epoxy resin composition with which a part or a whole of the fiber-reinforced base material is impregnated,
wherein the epoxy resin composition contains an epoxy resin, dicyandiamide, a urea-based curing accelerator, an aromatic amine, and polyamide particles,
the epoxy resin is an epoxy resin containing N,N,N',N'-tetraglycidyl diaminodiphenylmethane in an amount exceeding 60 parts by mass in 100 parts by mass of the epoxy resin,
the aromatic amine is an aromatic amine represented by the following formula (1):

[Chemical Formula 1]

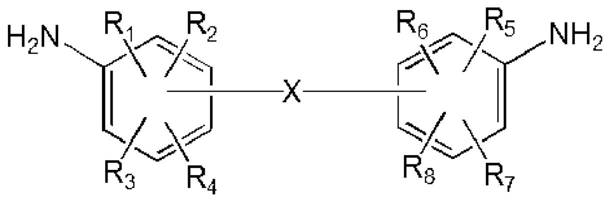

Chemical Formula (1)

wherein at least one substituent other than hydrogen is present at an ortho position to an amino group; in Chemical Formula 1, $R_1$ to $R_8$ are each independently any one of a hydrogen atom, an aliphatic substituent having 1 to 6 carbon atoms, an aromatic substituent, and a halogen atom, and at least one substituent is an aliphatic substituent having 1 to 6 carbon atoms; and X is any one of $-CH_2-$, $-CH(CH_3)-$, $-C(CH_3)_2-$, -S-, -O-, -CO-, -CONH-, and -C(=O)-,
the polyamide particles have a shape with an average aspect ratio of less than 1.30, and
a melting point (Tm) of the polyamide particles and an exothermic peak temperature (Tp) of the epoxy resin composition measured using a differential scanning calorimeter satisfy the following Numerical Formula (1):

$$Tp < Tm \leq Tp + 50 \quad \ldots \text{ Numerical Formula (1).}$$

[2] The prepreg according to [1], wherein a total content of the dicyandiamide and the urea-based accelerator with respect to 100 parts by mass of the epoxy resin is 2 to 12 parts by mass.
[3] The prepreg according to [1] or [2], wherein the epoxy resin composition further contains an epoxy resin-soluble thermoplastic resin.
[4] The prepreg according to any one of [1] to [3], wherein the epoxy resin composition further contains thickening particles composed of a polymer having one or two or more polymerization units selected from the group consisting of a methacrylic acid ester-based compound, an acrylic acid ester-based compound, and a vinyl-based compound.
[5] The prepreg according to any one of [1] to [4], wherein a blending amount of the polyamide particles is 1 to 50 parts by mass with respect to 100 parts by mass of the epoxy resin.
[6] A method for producing a fiber-reinforced composite material by laminating the prepreg according to any one of [1] to [5] and heat-molding the laminated prepreg, wherein a heating temperature during molding is an exothermic peak temperature (Tp) measured using a differential scanning calorimeter of the epoxy resin composition or higher and lower than a melting point (Tm) of the polyamide particles.

**Advantageous Effects of Invention**

In the prepreg of the present invention, the melting point (Tm) of the polyamide particles functioning as interlaminar particles and the exothermic peak temperature (Tp) of the epoxy resin composition measured using a differential scanning calorimeter have a predetermined relationship. Therefore, interfacial adhesion of the polyamide particles in the epoxy resin composition becomes high by heating during molding, and compression after impact (CAI) strength and mode II interlaminar toughness (GIIc) of the resulting fiber-reinforced composite material can be improved.
In addition, in the prepreg of the present invention, the polyamide particles functioning as interlaminar particles have a shape close to a perfect sphere. Therefore, the interfacial adhesion of the polyamide particles in the epoxy resin composition becomes high, toughness of the resulting fiber-reinforced composite material is improved, and the compression after impact (CAI) strength can be improved.

**Description of Embodiments**

Hereinafter, details of the prepreg of the present invention and a method for producing a fiber-reinforced composite material using the prepreg will be described.

1. Prepreg

The prepreg of the present invention includes a fiber-reinforced base material and an epoxy resin composition with which the fiber-reinforced base material is impregnated.

(1) Fiber-reinforced base material

The fiber-reinforced base material used in the present invention is not particularly limited, and examples thereof include base materials formed of carbon fibers, glass fibers, aramid fibers, silicon carbide fibers, polyester fibers, ceramic fibers, alumina fibers, boron fibers, metal fibers, mineral fibers, rock fibers, and slug fibers.

Among these fiber-reinforced base materials, fiber-reinforced base materials composed of carbon fibers, glass fibers, and aramid fibers are preferable. A fiber-reinforced base material composed of carbon fibers is more preferable from the viewpoint of obtaining a fiber-reinforced composite material having good specific strength and specific elastic modulus, light weight, and high strength. A fiber-reinforced base material composed of polyacrylonitrile (PAN)-based carbon fibers is particularly preferable from the viewpoint of excellent tensile strength.

When the PAN-based carbon fiber is used as a reinforcing fiber, the tensile elastic modulus thereof is preferably 100 to 600 GPa, more preferably 200 to 500 GPa, and particularly preferably 230 to 450 GPa. In addition, the tensile strength is preferably 2000 to 10,000 MPa, and more preferably 3000 to 8000 MPa. The monofilament diameter of the carbon fiber is preferably 4 to 20 μm, and more preferably 5 to 10 μm. By using such a carbon fiber, mechanical properties of the resulting fiber-reinforced composite material can be improved.

The reinforcing fiber is preferably formed into a sheet shape and used. Examples of the sheet-shaped fiber-reinforced base material include a sheet in which a large number of reinforcing fibers are aligned in one direction; a bidirectional woven fabric such as a plain woven fabric and a twill woven fabric; a multiaxial woven fabric; a nonwoven fabric; a mat; a knit; a braid; and a paper made of reinforcing fibers. Among them, use of a unidirectionally aligned sheet, a bidirectional woven fabric, or a multiaxial woven fabric base material in which reinforcing fibers are formed into a sheet shape as continuous fibers is preferable because a fiber-reinforced composite material more excellent in mechanical properties can be obtained. The thickness of the sheet-shaped fiber-reinforced base material is preferably 0.01 to 3 mm, and more preferably 0.1 to 1.5 mm.

The prepreg of the present invention is a prepreg in which a part or a whole of a fiber-reinforced base material is impregnated with an epoxy resin composition. The content of the epoxy resin composition in the whole prepreg is preferably 15 to 60% by mass with respect to the total mass of the prepreg. When the resin content is less than 15% by mass, voids and the like are generated in the resulting fiber-reinforced composite material, and the mechanical properties may be deteriorated. When the resin content is more than 60% by mass, a reinforcing effect by the reinforcing fibers becomes insufficient, and mechanical properties relative to mass may be substantially low. The resin content is more preferably 20 to 55% by mass, and still more preferably 25 to 50% by mass.

(2) Epoxy resin composition

The epoxy resin composition used in the present invention contains at least an epoxy resin, dicyandiamide, a urea-based curing accelerator, an aromatic amine, and polyamide particles. In addition to these, the epoxy resin composition used in the present invention may contain a thermoplastic resin and other additives.

Heat energy is released from the epoxy resin composition during the curing reaction. The exothermic peak temperature (Tp) measured using a differential scanning calorimeter (DSC) of the epoxy resin composition used in the present invention is preferably 110 to 200°C, and more preferably 120 to 190°C.

(2-1) Epoxy resin

The epoxy resin composition of the present invention contains N,N,N',N'-tetraglycidyl diaminodiphenylmethane represented by the following formula (2).

[Chemical Formula 2]

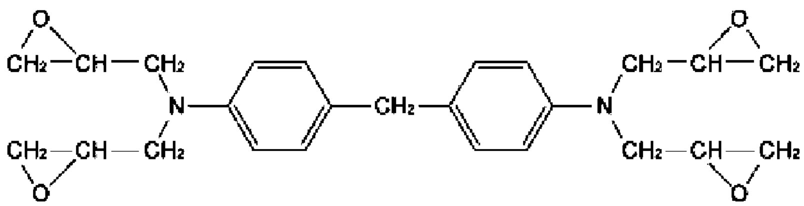

Chemical Formula (2)

The blending amount thereof is an amount exceeding 60 parts by mass in 100 parts by mass of the total epoxy resin. The blending amount of the epoxy resin is preferably 65 parts by mass or more, and more preferably 70 parts by mass or more with respect to 100 parts by mass of the total epoxy resin. In addition, the blending amount of the epoxy resin

is preferably 95 parts by mass or less, and more preferably 90 parts by mass or less with respect to 100 parts by mass of the total epoxy resin. When the blending amount is 60 parts by mass or less, mechanical properties of a cured product obtained by curing the epoxy resin composition may not be sufficiently high.

The epoxy resin composition of the present invention may contain an epoxy resin other than the above N,N,N',N'-tetraglycidyl diaminodiphenylmethane. Specific examples thereof include a bifunctional epoxy resin such as a bisphenol type epoxy resin, an alcohol type epoxy resin, a biphenyl type epoxy resin, a hydrophthalic acid type epoxy resin, a dimer acid type epoxy resin, or an alicyclic type epoxy resin; a glycidyl ether type epoxy resin such as tetrakis(glycidyloxyphenyl) ethane or tris(glycidyloxyphenyl)methane; a glycidyl amine type epoxy resin such as tetraglycidyl diaminodiphenylmethane; a naphthalene type epoxy resin; a phenol novolac type epoxy resin, which is a novolac type epoxy resin, and a cresol novolac type epoxy resin.

Furthermore, a polyfunctional epoxy resin such as a phenol type epoxy resin can be included. In addition, various modified epoxy resins such as a urethane-modified epoxy resin and a rubber-modified epoxy resin can also be used.

In particular, an epoxy resin having an aromatic group in the molecule is preferable, and an epoxy resin having either a glycidyl amine structure or a glycidyl ether structure is more preferable. In addition, an alicyclic epoxy resin can also be suitably used.

Examples of the epoxy resin having a glycidyl amine structure include N,N,O-triglycidyl-p-aminophenol, N,N,O-triglycidyl-m-aminophenol, N,N,O-triglycidyl-3-methyl-4-aminophenol, triglycidyl aminocresol, and various isomers thereof.

Examples of the epoxy resin having a glycidyl ether structure include a bisphenol A type epoxy resin, a bisphenol F type epoxy resin, a bisphenol S type epoxy resin, a phenol novolac type epoxy resin, and a cresol novolac type epoxy resin.

These epoxy resins may have a non-reactive substituent in an aromatic ring structure or the like as necessary. Examples of the non-reactive substituent include an alkyl group such as a methyl group, an ethyl group, or an isopropyl group; an aromatic groups such as a phenyl group; an alkoxyl group; an aralkyl group; and a halogen group such as chlorine or bromine.

Examples of the bisphenol type epoxy resin include a bisphenol A type resin, a bisphenol F type resin, a bisphenol AD type resin, and a bisphenol S type resin. Specific examples of the bisphenol type epoxy resin include jER 815, jER 828, jER 834, jER 1001, and jER 807 (trade names) manufactured by Mitsubishi Chemical Corporation; and EXA 1514 (trade name) manufactured by DIC Corporation.

Examples of the alicyclic type epoxy resin include ARALDITE CY-179, CY-178, CY-182, and CY-183 (trade names) manufactured by Huntsman Corporation.

Examples of the phenol novolac type epoxy resin include jER 152 and jER 154 (trade names) manufactured by Mitsubishi Chemical Corporation; DEN 431, DEN 485, and DEN 438 (trade names) manufactured by The Dow Chemical Company; and EPICLON N740 (trade name) manufactured by DIC Corporation. Examples of the cresol novolac type epoxy resin include ARALDITE ECN 1235, ECN 1273, and ECN 1280 (trade names) manufactured by Huntsman Corporation; EOCN 102, EOCN 103, and EOCN 104 (trade names) manufactured by Nippon Kayaku Co., Ltd.; Epotohto YDCN-700-10 and Epotohto YDCN-704 (trade names) manufactured by NIPPON STEEL Chemical & Material CO., LTD.; and EPICLON N680 and EPICLON N695 (trade names) manufactured by DIC Corporation.

Examples of the epoxy resin having a glycidyl amine structure include SUMI-EPOXY ELM 434, SUMI-EPOXY ELM 120, and SUMI-EPOXY ELM 100 (trade names) manufactured by Sumitomo Chemical Co., Ltd.; ARALDITE MY 0500, ARALDITE MY 0510, ARALDITE MY 0600, ARALDITE MY 720, ARALDITE MY 721, ARALDITE MY 9512, ARALDITE MY 9612, ARALDITE MY 9634, and ARALDITE MY 9663 (trade names) manufactured by Huntsman Corporation; jER 604 and jER 630 (trade names) manufactured by Mitsubishi Chemical Corporation; and Bakelite EPR 494, Bakelite EPR 495, Bakelite EPR 496, and Bakelite EPR 497 (trade names) manufactured by Bakelite AG.

Examples of the various modified epoxy resins include ADEKA RESIN EPU-6 and EPU-4 (trade names) manufactured by ADEKA CORPORATION as urethane-modified bisphenol A epoxy resins.

These epoxy resins (epoxy resins other than N,N,N',N'-tetraglycidyl diaminodiphenylmethane) can be appropriately selected and used alone or as a mixture of two or more thereof. The blending amount of these epoxy resins is less than 40 parts by mass, preferably 5 to 35 parts by mass, and more preferably 10 to 30 parts by mass with respect to 100 parts by mass of the total epoxy resin.

Among them, it is particularly preferable to contain the bisphenol A type epoxy resin in an amount of 10 to 30 parts by mass in 100 parts by mass of the total epoxy resin.

The content of the epoxy resins (all epoxy resins including N,N,N',N'-tetraglycidyl diaminodiphenylmethane) in the epoxy resin composition is preferably 50% by mass or more, more preferably 55% by mass or more, and particularly preferably 60% by mass or more.

(2-2) Dicyandiamide

In the present invention, dicyandiamide is used as a curing agent of the above epoxy resin from the viewpoint of excellent storage stability and curability of the prepreg and excellent physical properties of the fiber-reinforced composite material after curing.

Specific examples of the dicyandiamide (DICY) include jER CURE DICY 7 and DICY 15 (trade names) manufactured by Mitsubishi Chemical Corporation.

The blending amount of the dicyandiamide with respect to the epoxy resin is preferably 1 to 10 parts by mass, more preferably 2 to 10 parts by mass, and particularly preferably 2 to 8 parts by mass with respect to 100 parts by mass of the epoxy resin. When the blending amount of the dicyandiamide is 1 part by mass or more, crosslinking density becomes sufficient and a sufficient curing rate is obtained. When the blending amount of the dicyandiamide is 10 parts by mass or less, it is possible to suppress problems such as deterioration in mechanical properties of the cured product and turbidity of the cured product due to excessive presence of the curing agent.

(2-3) Urea-based curing accelerator

When the dicyandiamide described above is used in combination with a urea-based curing accelerator, dissolution temperature can be lowered. Examples of the urea-based curing accelerator include phenyldimethylurea (PDMU) and toluenebisdimethylurea (TBDMU).

The blending amount of the urea-based curing accelerator is preferably more than 0 parts by mass and 7 parts by mass or less, more preferably 0.05 to 7 parts by mass, and particularly preferably 0.1 to 5 parts by mass with respect to 100 parts by mass of the epoxy resin.

The total amount of the dicyandiamide and the urea-based curing accelerator is preferably 2 to 12 parts by mass, more preferably 3 to 11 parts by mass, and particularly preferably 4 to 10 parts by mass with respect to 100 parts by mass of the epoxy resin. When the total amount of the dicyandiamide and the urea-based curing accelerator is 2 parts by mass or more, crosslinking density can be high and a sufficient curing rate can be achieved. When the total amount of the dicyandiamide and the urea-based curing accelerator is 12 parts by mass or less, it is possible to suppress problems such as deterioration in mechanical properties of the cured product and turbidity of the cured product due to excessive presence of the curing agent.

(2-4) Aromatic amine

The aromatic amine used in the present invention is a compound represented by the following formula (1):

[Chemical Formula 3]

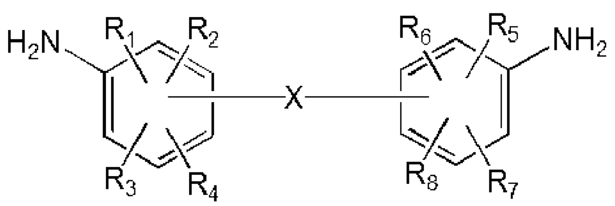

Chemical Formula (1)

wherein at least one substituent other than hydrogen is present at an ortho position to an amino group; in Chemical Formula 1, $R_1$ to $R_8$ are each independently any one of a hydrogen atom, an aliphatic substituent having 1 to 6 carbon atoms, an aromatic substituent, and a halogen atom, and at least one substituent is an aliphatic substituent having 1 to 6 carbon atoms; and X is any one of $-CH_2-$, - $CH(CH_3)-$, $-C(CH_3)_2-$, -S-, -O-, -CO-, -CONH-, and -C(=O)-.

Specific examples of the aromatic amine include compounds represented by the following formulas (3) to (6).

[Chemical Formula 4]

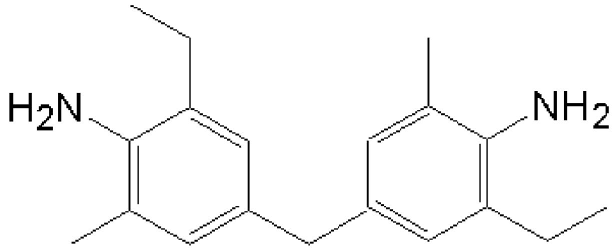

Chemical Formula (3)

[Chemical Formula 5]

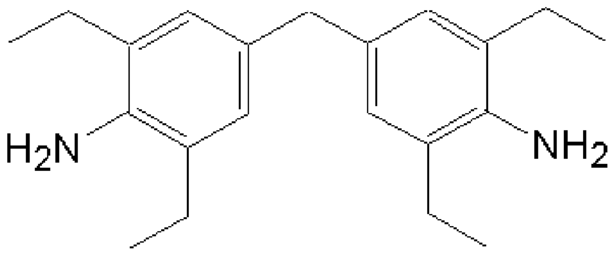

Chemical Formula (4)

[Chemical Formula 6]

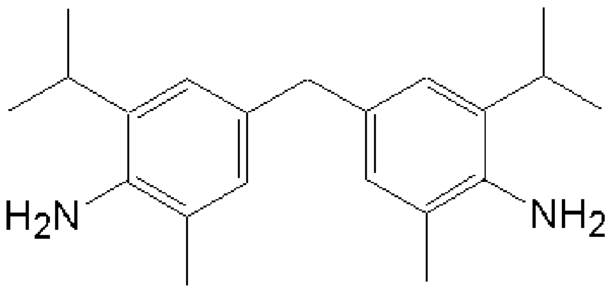

Chemical Formula (5)

[Chemical Formula 7]

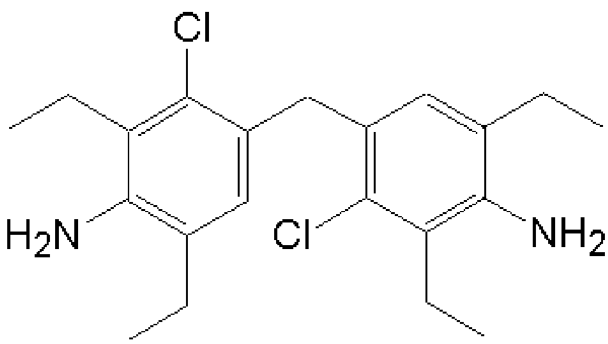

Chemical Formula (6)

The blending amount of the aromatic amine is preferably 3 to 20 parts by mass, more preferably 5 to 16 parts by mass, and particularly preferably 7 to 12 parts by mass with respect to 100 parts by mass of the epoxy resin. When the blending amount of the aromatic amine is 3 parts by mass or more, crosslinking density becomes high, and water absorption resistance of the cured product obtained by curing the epoxy resin composition can be increased. When the blending amount of the aromatic amine is 20 parts by mass or less, water absorption resistance of the cured product obtained by curing the epoxy resin composition can be increased without inhibiting rapid curability of the resin.

(2-5) Polyamide particles

The prepreg of the present invention contains predetermined polyamide particles.

Polyamide particles are dispersed between a reinforcing fiber base material and an adjacent reinforcing fiber base material in a fiber-reinforced composite material produced by laminating a plurality of prepregs (hereinafter, the dispersed particles are also referred to as "interlaminar particles"). The interlaminar particles improve toughness of the fiber-reinforced composite material.

It is considered that a part of at least one of an epoxy resin, an amine-based curing agent, and an epoxy resin-soluble thermoplastic resin permeates into a surface of the polyamide particles, and the polyamide particles have high affinity with the epoxy resin or the like on the surface of the polyamide particles. Therefore, it is considered that in the resulting fiber-reinforced composite material, interfacial adhesion of the polyamide particles in the epoxy resin composition constituting the matrix resin becomes high, and as a result, compression after impact (CAI) strength and mode II interlaminar toughness (GIIc) of the resulting fiber-reinforced composite material can be improved.

Examples of the polyamide particles include polyamide particles made of crystalline polyamide such as Nylon 6 (registered trademark) (PA6, polyamide obtained by ring-opening polymerization reaction of ε-caprolactam), Nylon 12 (PA12, polyamide obtained by ring-opening polymerization reaction of lauryl lactam or polycondensation reaction of 12-aminododecanoic acid), Nylon 1010 (PA1010, polyamide obtained by polycondensation reaction of sebacic acid and decamethylenediamine), and Nylon 11 (PA11, polyamide obtained by ring-opening polymerization reaction of undecane lactam or polycondensation reaction of 11-aminoundecanoic acid).

From the viewpoint of physical properties and the like of the resulting fiber-reinforced composite material, the crystallinity measured by an X-ray diffraction method of the polyamide particles is preferably 42% or less, and more preferably 25 to 42%.

The content of the polyamide particles in the epoxy resin composition is appropriately adjusted according to viscosity of the epoxy resin composition and the like. From the viewpoint of processability of the prepreg, the content is preferably 1 to 50 parts by mass, more preferably 5 to 40 parts by mass, and particularly preferably 10 to 30 parts by mass with respect to 100 parts by mass of the epoxy resin contained in the epoxy resin composition. When the content is less than 1 part by mass, impact resistance and toughness of the resulting fiber-reinforced composite material may be insufficient. When the content is more than 50 parts by mass, impregnation of the epoxy resin composition, drapability of the resulting prepreg, and the like may be deteriorated.

The melting point (Tm) of the polyamide particles is preferably 150 to 250°C, and more preferably 170 to 220°C. In addition, it is essential that the melting point (Tm) of the polyamide particles is higher than the exothermic peak temperature (Tp) measured using a differential scanning calorimeter of the epoxy resin composition described above, that is, $Tp < Tm$ is satisfied. Usually, the temperature for heat-molding the prepreg is Tp (°C) to Tp + 20 (°C). When $Tp < Tm$ is not satisfied, the polyamide particles are melted at the temperature during heat-molding and then crystallized again, so that the crystallinity of the polyamide particles greatly fluctuates, and adhesion of the polyamide particles in the epoxy resin composition is likely to decrease or the adhesion tends to vary. As a result, impact resistance and toughness of the resulting fiber-reinforced composite material may be deteriorated.

In the present invention, the melting point (Tm) of the polyamide particles and the exothermic peak temperature (Tp) measured using a differential scanning calorimeter of the epoxy resin composition described above satisfy the relationship of $Tm \leq Tp + 50$. That is, Tm - Tp is 50°C or lower. By satisfying this condition, a surface of the polyamide particles can be sufficiently swollen by the epoxy resin or the like at the temperature during heat-molding.

That is, in the present invention, the melting point (Tm) of the polyamide particles and the exothermic peak temperature (Tp) measured using a differential scanning calorimeter of the epoxy resin composition satisfy the following Numerical Formula (1).

$$Tp < Tm \leq Tp + 50 \quad \text{... Numerical Formula (1)}$$

By using polyamide particles having a melting point (Tm) in a range of Tp (°C) to Tp + 50 (°C), at least one of an epoxy resin, an amine-based curing agent, and an epoxy resin-soluble thermoplastic resin can be permeated into a surface of the polyamide particles by heating during molding, and interfacial adhesion of the polyamide particles in the epoxy resin composition can be improved.

The epoxy resin composition may be kneaded in advance under heating conditions of Tp (°C) to Tp + 50 (°C). By kneading, the epoxy resin or the like more easily permeate into voids in the polyamide particles or between and/or within molecules of the polyamide. At the time of kneading, it is preferable to adjust the temperature so that the epoxy resin composition is not cured, or to knead the epoxy resin composition without adding a curing agent. The kneading time is preferably 20 to 300 minutes, and more preferably 30 to 150 minutes.

In the present invention, it is essential that the polyamide particles have an average aspect ratio (ratio of major axis to minor axis of polyamide particles) of less than 1.30**.** The average aspect ratio is preferably 1.20 or less, and more

preferably 1.10 or less. Such polyamide particles can be uniformly blended in the resin composition. Furthermore, since the interlaminar particles are spherical, crack propagation energy can be isotropically absorbed as compared with general indefinite particles, and toughness can be stably improved. The method for obtaining such polyamide particles is not particularly limited, and examples thereof include a method in which a polyamide solution obtained by dissolving a polyamide in a solvent is precipitated in a poor solvent by adjusting the concentration of the solution or the solvent, and a method in which non-perfectly spherical polyamide particles are subjected to heat treatment in a gas phase. The heat treatment temperature can be appropriately adjusted depending on the polyamide particles to be used, and is preferably a temperature equal to or higher than the melting point (Tm) of the polyamide particles and lower than the decomposition temperature, more preferably 100 to 800°C, and still more preferably 250 to 600°C.

In addition, commercially available polyamide particles treated into a perfectly spherical shape can also be used.

The average particle diameter of the polyamide particles is preferably 1 to 50 μm, and particularly preferably 3 to 30 μm. When the average particle diameter is less than 1 μm, viscosity of the epoxy resin composition to which the polyamide particles are added is significantly increased. Therefore, it may be difficult to add a sufficient amount of the polyamide particles to the epoxy resin composition. When the average particle diameter is more than 50 μm, it may be difficult to obtain a sheet having a uniform thickness when the epoxy resin composition to which the polyamide particles are added is processed into a sheet shape.

(2-6) Thermoplastic resin

The prepreg of the present invention may contain a thermoplastic resin in addition to the polyamide particles described above. Examples of the thermoplastic resin include an epoxy resin-soluble thermoplastic resin and an epoxy resin-insoluble thermoplastic resin.

(2-6-1) Epoxy resin-soluble thermoplastic resin

The epoxy resin composition can also contain an epoxy resin-soluble thermoplastic resin. This epoxy resin-soluble thermoplastic resin adjusts viscosity of the epoxy resin composition and improves impact resistance of the resulting fiber-reinforced composite material.

The epoxy resin-soluble thermoplastic resin is a thermoplastic resin that can be partially or entirely dissolved in the epoxy resin at a temperature at which the fiber-reinforced composite material is molded or lower. Here, the phrase "partially dissolved in the epoxy resin" means that when 10 parts by mass of a thermoplastic resin having an average particle diameter of 10 to 50 μm is mixed with 100 parts by mass of the epoxy resin and stirred at 190°C for 1 hour, the particles disappear or the average particle diameter changes by 10% or more.

On the other hand, the epoxy resin-insoluble thermoplastic resin refers to a thermoplastic resin that is not substantially dissolved in the epoxy resin at a temperature at which the fiber-reinforced composite material is molded or lower. That is, the epoxy resin-insoluble thermoplastic resin refers to a thermoplastic resin in which when 10 parts by mass of a thermoplastic resin having an average particle diameter of 10 to 50 μm is mixed with 100 parts by mass of the epoxy resin and stirred at 190°C for 1 hour, the size of the particles does not change by 10% or more. In general, the temperature for molding the fiber-reinforced composite material is 100 to 190°C. In addition, the particle diameter is visually measured with a microscope, and the average particle diameter means an average value of particle diameters of 100 randomly selected particles.

When the epoxy resin-soluble thermoplastic resin is not completely dissolved, it is dissolved in the epoxy resin by being heated during a curing process of the epoxy resin, and viscosity of the epoxy resin composition can be increased. This makes it possible to prevent a flow of the epoxy resin composition (phenomenon in which the resin composition flows out from the inside of the prepreg) due to viscosity reduction in the curing process.

The epoxy resin-soluble thermoplastic resin is preferably a resin that is dissolved in the epoxy resin in an amount of 80% by mass or more at 190°C.

Specific examples of the epoxy resin-soluble thermoplastic resin include polyethersulfone, polysulfone, polyetherimide, and polycarbonate. These may be used alone or in combination of two or more thereof. The epoxy resin-soluble thermoplastic resin contained in the epoxy resin composition is particularly preferably polyethersulfone or polysulfone having a weight average molecular weight (Mw) in a range of 8000 to 60,000. When the weight average molecular weight (Mw) is less than 8000, the impact resistance of the resulting fiber-reinforced composite material becomes insufficient, and when the weight average molecular weight (Mw) is more than 60,000, the viscosity becomes significantly high and the handleability may be significantly deteriorated. The molecular weight distribution of the epoxy resin-soluble thermoplastic resin is preferably uniform. In particular, the polydispersity (Mw/Mn), which is a ratio of weight average molecular weight (Mw) to number average molecular weight (Mn), is preferably in a range of 1 to 10, and more preferably in a range of 1.1 to 5. In the present invention, the weight average molecular weight means a molecular weight measured by gel permeation chromatography.

The epoxy resin-soluble thermoplastic resin may have a reactive group having reactivity with the epoxy resin or a functional group forming a hydrogen bond. Such an epoxy resin-soluble thermoplastic resin can improve dissolution stability of the epoxy resin during a curing process. In addition, toughness, chemical resistance, heat resistance, and wet heat resistance can be imparted to the fiber-reinforced composite material obtained after curing.

The reactive group having reactivity with the epoxy resin is preferably a hydroxyl group, a carboxylic acid group, an imino group, an amino group, or the like. Use of hydroxyl-terminated polyethersulfone is more preferable because the resulting fiber-reinforced composite material is particularly excellent in impact resistance, fracture toughness, and solvent resistance.

The content of the epoxy resin-soluble thermoplastic resin contained in the epoxy resin composition is appropriately adjusted according to the viscosity, and from the viewpoint of processability of the prepreg, the content is preferably 5 to 90 parts by mass, more preferably 5 to 40 parts by mass, and still more preferably 10 to 35 parts by mass with respect to 100 parts by mass of the epoxy resin contained in the epoxy resin composition. When the content is less than 5 parts by mass, impact resistance of the resulting fiber-reinforced composite material may be insufficient. When the content of the epoxy resin-soluble thermoplastic resin is high, the viscosity becomes significantly high, and the handleability of the prepreg may be significantly deteriorated.

The form of the epoxy resin-soluble thermoplastic resin is not particularly limited, but is preferably particulate. The particulate epoxy resin-soluble thermoplastic resin can be uniformly blended in the resin composition. In addition, the resulting prepreg has high moldability.

The average particle diameter of the epoxy resin-soluble thermoplastic resin is preferably 1 to 50 μm, and particularly preferably 3 to 30 μm. When the average particle diameter is less than 1 μm, viscosity of the epoxy resin composition is significantly increased. Therefore, it may be difficult to add a sufficient amount of the epoxy resin-soluble thermoplastic resin to the epoxy resin composition. When the average particle diameter is more than 50 μm, it may be difficult to obtain a sheet having a uniform thickness when the epoxy resin composition is processed into a sheet shape. In addition, a rate of dissolution in the epoxy resin is reduced, and the resulting fiber-reinforced composite material becomes non-uniform, which is not preferable.

(2-6-2) Epoxy resin-insoluble thermoplastic resin

The epoxy resin composition may contain an epoxy resin-insoluble thermoplastic resin in addition to the above polyamide particles. Examples of the epoxy resin-insoluble thermoplastic resin include amorphous polyamide particles, polyacetal, polyphenylene oxide, polyphenylene sulfide, polyester, polyamideimide, polyimide, polyether ketone, polyether ether ketone, polyethylene naphthalate, polyether nitrile, and polybenzimidazole.

The content of the epoxy resin-insoluble thermoplastic resin in the epoxy resin composition is appropriately adjusted according to the viscosity of the epoxy resin composition, and from the viewpoint of processability of the prepreg, the total content of the epoxy resin-insoluble thermoplastic resin and the polyamide particles described in (2-5) is preferably 5 to 50 parts by mass, more preferably 7 to 45 parts by mass, and still more preferably 10 to 40 parts by mass with respect to 100 parts by mass of the epoxy resin contained in the epoxy resin composition.

The preferable average particle diameter and form of the epoxy resin-insoluble thermoplastic resin are the same as those of the epoxy resin-soluble thermoplastic resin.

As the epoxy resin-insoluble thermoplastic resin, thickening particles obtained by copolymerizing one or a plurality of unsaturated compounds and a crosslinkable monomer may be used for the purpose of obtaining an appropriate viscosity during molding processing. Although not particularly limited, it is desirable to contain thickening particles composed of a polymer having one or two or more polymerization units of an acrylic acid ester-based compound, a methacrylic acid ester-based compound, and a vinyl compound.

The acrylic acid ester-based compound used for the thickening particles refers to a compound having an acrylic acid ester structure and a derivative thereof, and examples thereof include methyl acrylate, ethyl acrylate, n-propyl acrylate, isopropyl acrylate, n-butyl acrylate, isobutyl acrylate, sec-butyl acrylate, t-butyl acrylate, n-hexyl acrylate, and cyclohexyl acrylate.

The methacrylic acid ester compound used for the thickening particles refers to a compound having a methacrylic acid ester structure and a derivative thereof, and examples thereof include methyl methacrylate, ethyl methacrylate, n-propyl methacrylate, isopropyl methacrylate, n-butyl methacrylate, n-hexyl methacrylate, and cyclohexyl methacrylate.

The vinyl compound used for the thickening particles refers to a compound having a polymerizable vinyl structure, and examples thereof include styrene, α-methylstyrene, divinylbenzene, and compounds in which aromatic rings thereof are substituted with various functional groups such as an alkyl group and a halogen atom.

In addition, the thickening particles may be a polymer composed of one or two or more polymerization units of a methacrylic acid ester-based compound, an acrylic acid ester-based compound, and a vinyl-based compound, or may be a resin obtained by mixing two or more resins having different structures. Furthermore, the thickened particles may be

(iii) a composite resin ionically crosslinked by adding a metal ion to
(i) a polymer composed of at least one of an acrylic acid ester-based compound, a methacrylic acid ester-based compound, and a diene-based compound, and
(ii) a polymer composed of an acrylic acid ester-based compound or a methacrylic acid ester-based compound and a radically polymerizable unsaturated carboxylic acid.

As the thickening particles, a polymer composed of one or two or more polymerization units selected from the group consisting of a methacrylic acid ester-based compound, an acrylic acid ester-based compound, and a vinyl-based compound is preferable, and an alkyl methacrylate polymer is more preferable.
The average polymerization degree of the thickening particles is preferably 4,000 to 40,000.
As the thickening particles, it is also preferable to use a commercially available product made of an alkyl methacrylate polymer having no core-shell structure, such as ZEFIAC F325 and ZEFIAC F320 (both manufactured by Aica Kogyo Company, Limited).
The particle diameter and the like of the thickening particles are not particularly limited, but the average particle diameter is preferably 0.3 to 10 μm, and more preferably 0.5 to 8 μm. When the thickening particles are blended, the content thereof is preferably 1 to 15 parts by mass, more preferably 2 to 12 parts by mass, and particularly preferably 3 to 10 parts by mass with respect to 100 parts by mass of the epoxy resin.
Since the epoxy resin has a low viscosity before swelling of the thickening particles, the epoxy resin is excellent in impregnation into the fiber-reinforced base material layer. The thickening particles dispersed in the epoxy resin swell in the epoxy resin by heating. The swelling of the thickening particles proceeds with temperature and time, and the viscosity of the epoxy resin rapidly increases as the thickening particles swell. When the viscosity of the epoxy resin increases in the fiber-reinforced base material layer due to swelling of the thickening particles, resin flow during molding is suppressed. As a result, both resin impregnation and suppression of resin flow can be achieved at a high level.

(2-7) Other additives

In the epoxy resin composition of the present invention, conductive particles, a flame retardant, an inorganic filler, and an internal mold release agent may be blended.
Examples of the conductive particles include conductive polymer particles such as polyacetylene particles, polyaniline particles, polypyrrole particles, polythiophene particles, polyisothianaphthene particles, and polyethylene dioxythiophene particles; carbon particles; carbon fiber particles; metal particles; and particles obtained by coating a core material made of an inorganic material or an organic material with a conductive substance.
Examples of the flame retardant include a phosphorus-based flame retardant. The phosphorus-based flame retardant is not particularly limited as long as it contains a phosphorus atom in the molecule, and examples thereof include organic phosphorus compounds such as a phosphoric acid ester, a condensed phosphoric acid ester, a phosphazene compound, and a polyphosphate, and red phosphorus.
Examples of the inorganic filler include aluminum borate, calcium carbonate, silicon carbonate, silicon nitride, potassium titanate, basic magnesium sulfate, zinc oxide, graphite, calcium sulfate, magnesium borate, magnesium oxide, and a silicate mineral. In particular, it is preferable to use a silicate mineral. Examples of commercially available products of the silicate mineral include THIXOTROPIC AGENT DT 5039 (manufactured by Huntsman Corporation).
Examples of the internal mold release agent include metal soaps; vegetable waxes such as polyethylene wax and carvana wax; fatty acid ester-based mold release agents; silicon oil; animal wax; and fluorine-based nonionic surfactants. The blending amount of these internal mold release agents is preferably 0.1 to 5 parts by mass, and more preferably 0.2 to 2 parts by mass with respect to 100 parts by mass of the epoxy resin. Within this range, a release effect from a mold is suitably exhibited.
Examples of commercially available products of the internal mold release agent include "MOLD WIZ (registered trademark)" INT1846 (manufactured by AXEL PLASTICS RESEARCH LABORATORIES INC.), Licowax S, Licowax P, Licowax OP, Licowax PE190, Licowax PED (manufactured by Clariant (Japan) K.K.), and stearyl stearate (SL-900A; manufactured by Riken Vitamin Co., Ltd.).

(2-8) Method for producing epoxy resin composition

The epoxy resin composition used in the present invention can be produced by mixing an epoxy resin, dicyandiamide, a urea-based curing accelerator, an aromatic amine, polyamide particles, and if necessary, a thermoplastic resin and other additives.
In the present invention, the epoxy resin and the polyamide particles are preferably kneaded at a temperature of 70 to 150°C for 10 minutes or more. The epoxy resin can be permeated into the polyamide particles by kneading the epoxy resin and the polyamide particles under heating conditions for a certain period of time or longer. By kneading for a long time

under heating conditions, the epoxy resin or the like permeates into voids in the polyamide particles. The kneading temperature is more preferably 90 to 140°C, and particularly preferably 115 to 130°C. The kneading time is more preferably 20 to 300 minutes, and particularly preferably 30 to 150 minutes.

When the epoxy resin and the polyamide particles are kneaded at a temperature of 70 to 150°C for 10 minutes or more, dicyandiamide and the urea-based curing accelerator are preferably added after kneading.

Examples of the mixing temperature after the addition of the curing agent include a range of 10 to Tp (°C). When the mixing temperature exceeds Tp (°C), curing reaction partially proceeds, so that impregnation into the reinforcing fiber base material layer may be deteriorated, or storage stability of the resulting epoxy resin composition and the prepreg produced using the epoxy resin composition may be deteriorated. When the mixing temperature is lower than 10°C, viscosity of the epoxy resin composition is high, and mixing may be substantially difficult. The mixing temperature is preferably 20 to 130°C, and more preferably in a range of 30 to 100°C.

As the mixing machine device, a conventionally known device can be used. Specific examples thereof include a roll mill, a planetary mixer, a kneader, an extruder, a Banbury mixer, a mixing vessel equipped with a stirring blade, and a horizontal mixing tank. Respective components can be mixed in the air, under an inert gas atmosphere, or under reduced pressure. When mixing is performed in the air, an atmosphere in which temperature and humidity are controlled is preferable. Although not particularly limited, for example, it is preferable to mix in a temperature controlled at a constant temperature of 30°C or lower or in a low-humidity atmosphere having a relative humidity of 50%RH or lower.

(3) Method for producing prepreg

The method for producing the prepreg of the present invention is not particularly limited, and any conventionally known method can be used. Specifically, a hot melt method or a solvent method can be suitably used.

The hot melt method is a method in which a resin composition is applied onto a release paper in the form of a thin film to form a resin composition film, and the resin composition film is laminated on a reinforcing fiber base material and heated under pressure to impregnate the reinforcing fiber base material layer with the resin composition.

The method for forming a resin composition into a resin composition film is not particularly limited, and any conventionally known method can be used. Specifically, a resin composition film can be obtained by flow casting and casting a resin composition on a support such as a release paper or a film using die extrusion, an applicator, a reverse roll coater, a comma coater, or the like. The resin temperature in producing the film is appropriately determined according to the composition and viscosity of the resin composition. Specifically, the same temperature condition as the mixing temperature in the method for producing an epoxy resin composition described above is suitably used. Impregnation of the reinforcing fiber base material layer with the resin composition may be performed once or may be performed several times.

The solvent method is a method in which an epoxy resin composition is formed into a varnish using an appropriate solvent, and a reinforcing fiber base material layer is impregnated with this varnish.

Among these conventional methods, the prepreg of the present invention can be suitably produced by a hot melt method without using a solvent.

The impregnation temperature in the case of impregnating the reinforcing fiber base material layer with the epoxy resin composition film by a hot melt method is preferably in a range of 50 to Tp (°C). When the impregnation temperature is lower than 50°C, the viscosity of the epoxy resin is high, and the reinforcing fiber base material layer may not be sufficiently impregnated with the epoxy resin composition film. When the impregnation temperature exceeds Tp (°C), curing reaction of the epoxy resin composition proceeds, so that storage stability of the resulting prepreg may be deteriorated or drapability may be deteriorated. As an example of a specific impregnation temperature, 60 to 145°C is more preferable, and 70 to 140°C is particularly preferable.

The impregnation pressure at the time of impregnating the reinforcing fiber base material layer with the epoxy resin composition film by a hot melt method is appropriately determined in consideration of the viscosity, resin flow, and the like of the resin composition.

A specific impregnation pressure is 1 to 50 (kN/cm), and more preferably 2 to 40 (kN/cm).

2. Method for producing fiber-reinforced composite material

A fiber-reinforced composite material can be obtained by heating and pressurizing the prepreg of the present invention under specific conditions to cure the prepreg.

Examples of the method for producing a fiber-reinforced composite material using the prepreg of the present invention include known molding methods such as autoclave molding and press molding.

(1) Autoclave molding method

As the method for producing the fiber-reinforced composite material of the present invention, an autoclave

molding method is preferably used. The autoclave molding method is a molding method in which a prepreg and a film bag are sequentially laid on a lower mold of a mold, the prepreg is sealed between the lower mold and the film bag, a space formed by the lower mold and the film bag is evacuated, and heating and pressurization are performed by an autoclave molding apparatus. As the conditions for molding, it is preferable to set the temperature raising rate to 1 to 50 °C/min, and perform heating and pressurization at a pressure of 0.2 to 0.7 MPa and a temperature of Tp (°C) or higher and lower than Tm (°C) for 10 to 150 minutes. When the molding temperature is Tp (°C) or higher, curing reaction can sufficiently occur, and a fiber-reinforced composite material can be obtained with high productivity. Here, the molding temperature means the maximum holding temperature. In addition, when the molding temperature is lower than Tm (°C), problems caused by melting of the polyamide particles do not occur. A more preferable temperature is Tp (°C) or higher and Tp + 30 (°C) or lower.

(2) Press molding method

As the method for producing the fiber-reinforced composite material of the present invention, a press molding method is preferably used. Production of the fiber-reinforced composite material by a press molding method is performed by heating and pressurizing the prepreg of the present invention or a preform formed by laminating the prepreg of the present invention using a mold. The mold is preferably heated to a curing temperature in advance.

The temperature of the mold during press molding is preferably Tp (°C) or higher and lower than Tm (°C). When the molding temperature is Tp (°C) or higher, curing reaction can sufficiently occur, and a fiber-reinforced composite material can be obtained with high productivity. In addition, when the molding temperature is lower than Tm (°C), problems caused by melting of the polyamide particles do not occur. A more preferable temperature is Tp (°C) or higher and Tp + 30 (°C) or lower.

The pressure during molding is 0.2 to 2 MPa. When the pressure is 0.2 MPa or more, an appropriate flow of the resin is obtained, and poor appearance and generation of voids can be prevented. In addition, since the prepreg sufficiently adheres to the mold, a fiber-reinforced composite material having good appearance can be produced. When the pressure is 2 MPa or less, the resin is not allowed to flow more than necessary, so that the resulting fiber-reinforced composite material is less likely to have poor appearance. In addition, since an excessive load is not applied to the mold, deformation of the mold and the like hardly occur.

The molding time is 1 to 60 minutes, preferably 3 to 40 minutes, and more preferably 5 to 30 minutes.

The resulting fiber-reinforced composite material preferably has a compression after impact (CAI) strength of 260 (MPa) or more, more preferably 270 MPa or more, still more preferably 280 MPa or more, and most preferably 290 MPa or more as measured by the method in Examples.

In addition, the resulting fiber-reinforced composite material preferably has a mode II interlaminar toughness (GIIc) of 9 (in-lbs/$in^2$) or more, more preferably 10 (in-lbs/$in^2$) or more, still more preferably 10.5 (in-lbs/$in^2$) or more, and most preferably 11.0 (in-lbs/$in^2$) or more as measured by the method in Examples.

**Examples**

Hereinafter, the present invention will be described more specifically with reference to Examples, but the present invention is not limited to Examples. Components and test methods used in Examples and Comparative Examples will be described below.

[Component]

(Epoxy resin)

- "jER (registered trademark)" 604: (Tetraglycidyl diaminodiphenylmethane type epoxy resin, manufactured by Mitsubishi Chemical Corporation)
- "jER (registered trademark)" 828: (Liquid bisphenyl A type epoxy resin, manufactured by Mitsubishi Chemical Corporation)

(Curing agent, curing accelerator)

- Dicy7: (Dicyandiamide, manufactured by Mitsubishi Chemical Corporation)
- "OMICURE (registered trademark)" 24: (2,4'-Toluenebis(3,3-dimethylurea), manufactured by Huntsman Corporation)

(Aromatic amine)

- CUREHARD MED: Having the structure of the above Chemical Formula (1) (manufactured by KUMIAI CHEMICAL INDUSTRY CO., LTD.)

(Polyamide particles)

- PA12 (perfect sphere): Polyamide 12 resin particles (MSP-ZL9010 (trade name), average particle diameter: 20 μm, aspect ratio: 1.06, manufactured by Polyplastics-Evonik Corporation)
- PA1010 (perfect sphere): Polyamide 1010 resin particles (MSP-A7723 (trade name), average particle diameter: 20 μm, aspect ratio: 1.04, manufactured by Polyplastics-Evonik Corporation)
- PA12 (indefinite): Polyamide 12 resin particles (VESTSINT 2158 (trade name), average particle diameter: 20 μm, aspect ratio: 1.35, manufactured by Polyplastics-Evonik Corporation)
- PA1010 (indefinite): Polyamide 1010 resin particles (VESTSINT 9158 (trade name), average particle diameter: 20 μm, aspect ratio: 1.37, manufactured by Polyplastics-Evonik Corporation)
- PA11 (indefinite): Polyamide 11 resin particles (RILSAN PA11 D30 NAT (trade name), average particle diameter: 20 μm, aspect ratio: 1.46, manufactured by Arkema S.A.)

(Epoxy resin-soluble thermoplastic resin 1)

- Polyethersulfone: SUMIKAEXCEL 5003P (trade name) (average particle diameter: 20 μm, manufactured by Sumitomo Chemical Co., Ltd.)

(Epoxy resin-soluble thermoplastic resin 2)

- "ZEFIAC (registered trademark)" F320: (Alkyl methacrylate polymer), average polymerization degree: 30,000, manufactured by Aica Kogyo Company, Limited

(Carbon fiber)

- Tenax (registered trademark) IMS65: Carbon fiber strand, tensile strength: 6000 MPa, tensile elastic modulus: 290 GPa, manufactured by TEIJIN LIMITED

The raw material mixing ratio of the epoxy resin composition of each Example was set to the ratio shown in Table 1, and the epoxy resin composition was prepared by mixing according to the following mixing procedure.

[Mixing procedure]

Predetermined amounts of an epoxy resin, polyamide particles, and epoxy resin-soluble thermoplastic resin 1 were added to a planetary mixer, and the mixture was heated to 120°C while being stirred. After reaching 120°C, the mixture was stirred for 1 hour to dissolve the epoxy resin-soluble thermoplastic resin. Thereafter, the temperature was lowered to 60°C with stirring, and the dissolved product was taken out. The above dissolved product, a curing agent, a curing accelerator, an aromatic amine, and epoxy resin-soluble thermoplastic resin 2 were kneaded until they became uniform with a three-roll mill heated to 70°C to obtain an epoxy resin composition.

[Evaluation method]

(1) Production of unidirectional prepreg

A unidirectional prepreg was produced as follows. Using a reverse roll coater, the epoxy resin composition obtained in the above mixing procedure was applied onto a release paper to produce a resin film having a basis weight of 50 $g/m^2$. Next, carbon fibers were aligned in one direction so that the fiber mass per unit area was 190 $g/m^2$ to produce a sheet-shaped fiber-reinforced base material layer. The above resin films were stacked on both surfaces of the fiber-reinforced base material layer, and heated and pressurized under conditions of a temperature of 100°C and a pressure of 0.2 MPa to produce a unidirectional prepreg having a carbon fiber content of 65% by mass.

(2) Compression after impact (CAI) strength

The unidirectional prepreg obtained in the above (1) was cut into a square having a side of 360 mm, and a laminate in which 24 sheets were laminated in a configuration of $[+45°/0°/-45°/90°]_{3s}$ was put in a bag, and the temperature of the laminate was raised at 2 °C/min in an autoclave, and the laminate was heated at a predetermined curing temperature for 30 minutes, and cured to produce a molded sheet (carbon fiber-reinforced composite material). During this time, the inside of the autoclave was pressurized to 0.50 MPa, and the inside of the bag was kept in vacuum.
Measurement was performed according to ASTM-D7136 and ASTM-D7137 test methods.

(3) Interlaminar fracture toughness mode II (GIIc)

The prepreg obtained in the above (1) was cut into a predetermined size and then laminated to produce two laminates in which 10 layers were laminated in the 0° direction. In order to form an initial crack, a release sheet was sandwiched between two laminates, and the two laminates were combined to obtain a prepreg laminate having a lamination configuration $[0]_{20}$. Using a normal vacuum autoclave molding method, molding was performed at a temperature raising rate of 2 °C/min and a curing temperature of 160°C to 180°C under a pressure of 0.50 MPa for 20 minutes. The resulting molded product was cut into a size of width 12.7 mm × length 330.2 mm to obtain a test piece of interlaminar fracture toughness mode II (GIIc). A GIIc test was performed using this test piece.
As the GIIc test method, an end notched flexure (ENF) test for applying a three-point bending load was performed. The distance between fulcrums was 101.6 mm. The test piece was disposed such that the tip of a sheet made of a PTFE sheet having a thickness of 25 μm was 38.1 mm from the fulcrum, and a bending load was applied to this test piece at a speed of 2.54 mm/min to form an initial crack.
Thereafter, the test piece was disposed such that the tip of the crack was at a position of 25.4 mm from the fulcrum, and a bending load was applied at a speed of 2.54 mm/min to perform the test. Similarly, three tests were performed, and after GIIc of each test was calculated from the load-stroke of each bending test, the average value thereof was calculated.
The tip of the crack was measured from both end surfaces of the test piece using a microscope. The measurement of the GIIc test was performed using test pieces of n = 5.

(4) Shape of polyamide particles

The major axis and minor axis of the polyamide particles sprayed on a glass slide were measured at 200 times with a microscope (VHX-5000) manufactured by KEYENCE CORPORATION, and the aspect ratio (major axis/minor axis) was calculated from the ratio of the major axis to the minor axis. The aspect ratio of the particles means an average value of values calculated from 100 randomly extracted particles.

(5) Exothermic peak temperature (Tp) of epoxy resin composition

The exothermic peak temperature (Tp) of the epoxy resin composition was measured using a differential scanning calorimeter (DSC) manufactured by Shimadzu Corporation. Tp means a peak temperature of an exothermic peak obtained at a temperature raising rate of 2 °C/min under a nitrogen atmosphere.
Measurement was performed according to an ASTM-D3418 test method.

(6) Melting point (Tm) of polyamide particles

The melting point of the polyamide particles was measured using a differential scanning calorimeter (DSC) manufactured by Shimadzu Corporation. The endothermic peak temperature (Tm) means a peak temperature of an exothermic peak obtained at a temperature raising rate of 10 °C/min under a nitrogen atmosphere.
Measurement was performed according to an ASTM-D3418 test method.

[Examples 1 to 8, Comparative Examples 1 to 5]

The components shown in Table 1 were mixed using a stirrer to obtain an epoxy resin composition. Various physical properties of the obtained epoxy resin composition are shown in Table 1.
In addition, a unidirectional prepreg was produced by the method of the above (1), a composite material was produced using the unidirectional prepreg, and the physical properties thereof were evaluated. The results are shown in Table 1.
The prepreg of Examples 1 to 8 exhibited excellent CAI and GIIc because the aspect ratio of the polyamide particles was less than 1.30 and Tm - Tp was 50°C or lower.

In Comparative Example 1, perfectly spherical polyamide particles were used, but Tp < Tm was not satisfied, so that it was considered that the polyamide particles were at least partially melted during curing of the prepreg, and CAI and GIIc decreased.

In Comparative Example 2, perfectly spherical polyamide particles were used, but Tm ≤ Tp + 50 was not satisfied, so that it was considered that the epoxy resin or the like did not permeate into the polyamide particles, and CAI and GIIc decreased.

In Comparative Examples 3 to 4, the aspect ratio of the polyamide particles was large, so that it was considered that cracks could not be developed isotropically, and particularly GIIc significantly decreased.

In Comparative Example 5, the aspect ratio of the polyamide particles was large and Tm ≤ Tp + 50 was not satisfied, so that it was considered that the epoxy resin did not permeate into the polyamide particles and cracks could not be developed isotropically, and CAI and GIIc decreased.

[Table 1]

(Table 1)

| | | Example 1 | Example 2 | Example 3 | Example 4 | Example 5 | Example 6 | Example 7 | Example 8 |
|---|---|---|---|---|---|---|---|---|---|
| Epoxy resin | TGDDM | 85 | 70 | 70 | 70 | 85 | 70 | 70 | 70 |
| | BPA | 15 | 30 | 30 | 30 | 15 | 30 | 30 | 30 |
| Curing agent | DICY | 2 | 2 | 4 | 2 | 6 | 6 | 8 | 6 |
| Curing accelerator | Urea accelerator | 3 | 3 | 5 | 3 | 0.1 | 0.1 | 0.1 | 0.1 |
| Aromatic amine | Hindered amine | 8 | 8 | 10 | 8 | 8 | 8 | 10 | 8 |
| Epoxy resin-soluble thermoplastic resin 1 | PES | 15 | 20 | 20 | 20 | 20 | 20 | 20 | 20 |
| Polyamide particles | PA1010 particles (perfect sphere) | 0 | 0 | 0 | 0 | 20 | 20 | 20 | 25 |
| | PA12 particles (perfect sphere) | 20 | 20 | 20 | 25 | 0 | 0 | 0 | 0 |
| | PA1010 particles (indefinite) | 0 | 0 | 0 | 0 | 0 | 0 | 0 | 0 |
| | PA12 particles (indefinite) | 0 | 0 | 0 | 0 | 0 | 0 | 0 | 0 |
| | PA11 particles (indefinite) | 0 | 0 | 0 | 0 | 0 | 0 | 0 | 0 |
| Epoxy resin-soluble thermoplastic resin 2 | Acrylic particles | 5 | 5 | 5 | 5 | 5 | 5 | 5 | 5 |
| Average aspect ratio of polyamide particles | | 1.06 | 1.06 | 1.06 | 1.06 | 1.04 | 1.04 | 1.04 | 1.04 |
| Curing temperature (°C) | | 160 | 160 | 160 | 160 | 180 | 180 | 180 | 180 |
| Tm (°C) | | 178 | 178 | 178 | 178 | 202 | 202 | 202 | 202 |
| Tp (°C) | | 143 | 140 | 136 | 139 | 180 | 178 | 177 | 174 |
| Tm - Tp (°C) | | 35 | 38 | 42 | 39 | 22 | 24 | 25 | 28 |
| CAI (MPa) | | 287 | 290 | 300 | 293 | 268 | 261 | 262 | 267 |
| Damage area ($mm^2$) | | 702 | 641 | 635 | 649 | 691 | 672 | 701 | 678 |
| GIIc (in-lbs/$in^2$) | | 10.2 | 10.7 | 10.3 | 11.3 | 10.1 | 10.6 | 11.2 | 11.2 |

[Table 2]

| (Continuation 1 of Table 1) | | | | | | |
|---|---|---|---|---|---|---|
| | | Comparative Example 1 | Comparative Example 2 | Comparative Example 3 | Comparative Example 4 | Comparative Example 5 |
| Epoxy resin | TGDDM | 70 | 70 | 70 | 70 | 70 |
| | BPA | 30 | 30 | 30 | 30 | 30 |
| Curing agent | DICY | 6 | 2 | 2 | 2 | 2 |
| Curing accelerator | Urea accelerator | 0.1 | 3 | 3 | 3 | 3 |
| Aromatic amine | Hindered amine | 8 | 8 | 8 | 8 | 8 |
| Epoxy resin-soluble thermoplastic resin 1 | PES | 20 | 20 | 20 | 20 | 20 |
| Polyamide particles | PA1010 particles (perfect sphere) | 0 | 20 | 0 | 0 | 0 |
| | PA12 particles (perfect sphere) | 20 | 0 | 0 | 0 | 0 |
| | PA1010 particles (indefinite) | 0 | 0 | 0 | 0 | 20 |
| | PA12 particles (indefinite) | 0 | 0 | 0 | 20 | 0 |
| | PA11 particles (indefinite) | 0 | 0 | 20 | 0 | 0 |
| Epoxy resin-soluble thermoplastic resin 2 | Acrylic particles | 5 | 5 | 5 | 5 | 5 |
| Average aspect ratio of polyamide particles | | 1.04 | 1.04 | 1.46 | 1.35 | 1.37 |
| Curing temperature (°C) | | 180 | 180 | 160 | 160 | 160 |
| Tm (°C) | | 178 | 202 | 185 | 178 | 202 |
| Tp (°C) | | 180 | 140 | 139 | 140 | 140 |
| Tm - Tp (°C) | | -2 | 62 | 46 | 38 | 62 |
| CAI (MPa) | | 255 | 234 | 220 | 240 | 201 |
| Damage area ($mm^2$) | | 811 | 933 | 1040 | 985 | 1120 |
| GIIc (in-lbs/$in^2$) | | 9.2 | 8.7 | 8.2 | 8.5 | 6.8 |

## Claims

1. A prepreg comprising:

   a fiber-reinforced base material; and
   an epoxy resin composition with which a part or a whole of the fiber-reinforced base material is impregnated,
   wherein the epoxy resin composition contains an epoxy resin, dicyandiamide, a urea-based curing accelerator, an aromatic amine, and polyamide particles,
   the epoxy resin is an epoxy resin containing N,N,N',N'-tetraglycidyl diaminodiphenylmethane in an amount exceeding 60 parts by mass in 100 parts by mass of the epoxy resin,
   the aromatic amine is an aromatic amine represented by the following formula (1):

   [Chemical Formula 1]

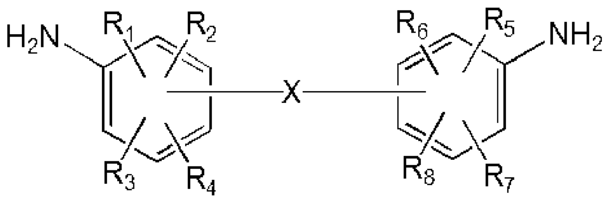

Chemical Formula (1)

   wherein at least one substituent other than hydrogen is present at an ortho position to an amino group; in Chemical Formula 1, $R_1$ to $R_8$ are each independently any one of a hydrogen atom, an aliphatic substituent having 1 to 6 carbon atoms, an aromatic substituent, and a halogen atom, and at least one substituent is an aliphatic substituent having 1 to 6 carbon atoms; and X is any one of $-CH_2-$, $-CH(CH_3)-$, $-C(CH_3)_2-$, -S-, -O-, -CO-, -CONH-, and -C(=O)-,
   the polyamide particles have a shape with an average aspect ratio of less than 1.30, and
   a melting point (Tm) of the polyamide particles and an exothermic peak temperature (Tp) of the epoxy resin composition measured using a differential scanning calorimeter satisfy the following Numerical Formula (1):

$$Tp < Tm \leq Tp + 50 \quad \ldots \text{ Numerical Formula (1).}$$

2. The prepreg according to claim 1, wherein a total content of the dicyandiamide and the urea-based accelerator with respect to 100 parts by mass of the epoxy resin is 2 to 12 parts by mass.

3. The prepreg according to claim 1, wherein the epoxy resin composition further contains an epoxy resin-soluble thermoplastic resin.

4. The prepreg according to claim 1, wherein the epoxy resin composition further contains thickening particles composed of a polymer having one or two or more polymerization units selected from the group consisting of a methacrylic acid ester-based compound, an acrylic acid ester-based compound, and a vinyl-based compound.

5. The prepreg according to claim 1, wherein a blending amount of the polyamide particles is 1 to 50 parts by mass with respect to 100 parts by mass of the epoxy resin.

6. A method for producing a fiber-reinforced composite material by laminating the prepreg according to claim 1 and heat-molding the laminated prepreg, wherein a heating temperature during molding is an exothermic peak temperature (Tp) measured using a differential scanning calorimeter of the epoxy resin composition or higher and lower than a melting point (Tm) of the polyamide particles.

## INTERNATIONAL SEARCH REPORT

International application No.
**PCT/JP2023/034860**

**A. CLASSIFICATION OF SUBJECT MATTER**

***C08J 5/24***(2006.01)i; ***B29C 70/42***(2006.01)i; ***C08G 59/56***(2006.01)i; *B29K 63/00*(2006.01)n
FI: C08J5/24 CFC; B29C70/42; C08G59/56; B29K63:00

According to International Patent Classification (IPC) or to both national classification and IPC

**B. FIELDS SEARCHED**

Minimum documentation searched (classification system followed by classification symbols)

C08J5/04-5/10;5/24; B29B11/16;15/08-15/14; B29C70/00-70/88; C08G59/00-59/72; C08L63/00-63/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2018/016138 A1 (DAICEL-EVONIK LTD) 25 January 2018 (2018-01-25) entire text | 1-6 |
| A | JP 2018-528103 A (CYTEC INDUSTRIES INC) 27 September 2018 (2018-09-27) entire text | 1-6 |
| A | JP 2019-156982 A (TEIJIN LTD) 19 September 2019 (2019-09-19) entire text | 1-6 |
| A | WO 2014/001537 A1 (GURIT (UK) LTD) 03 January 2014 (2014-01-03) entire text | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 December 2023** | **26 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/034860**

| Patent document cited in search report | Publication date (day/month/year) | Patent family member(s) | Publication date (day/month/year) |
|---|---|---|---|
| WO 2018/016138 A1 | 25 January 2018 | US 2019/0161587 A1 | |
| | | EP 3489282 A1 | |
| | | CN 109476851 A | |
| | | KR 10-2019-0031268 A | |
| | | TW 201809084 A | |
| JP 2018-528103 A | 27 September 2018 | US 2018/0244873 A1 | |
| | | WO 2017/035175 A1 | |
| | | EP 3341194 A1 | |
| | | AU 2016312416 A | |
| | | KR 10-2018-0044932 A | |
| | | CN 108349200 A | |
| JP 2019-156982 A | 19 September 2019 | US 2021/0024713 A1 | |
| | | WO 2019/176935 A1 | |
| | | EP 3766925 A1 | |
| | | TW 201942220 A | |
| WO 2014/001537 A1 | 03 January 2014 | GB 2503503 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2019156982 A